# EUROPÄISCHE PATENTSCHRIFT

(11) **EP 3 500 469 B1**
(45) Veröffentlichungstag und Bekanntmachung des Hinweises auf die Patenterteilung: **15.11.2023**
(21) Anmeldenummer: 17739568.8
(22) Anmeldetag: 13.07.2017
(51) Int. Cl.: B60W 50/10, B60W 40/09, B60W 50/00

(54) **AUTOMATISIERTES BETREIBEN EINES KRAFTFAHRZEUGS**
AUTOMATED OPERATION OF A MOTOR VEHICLE
FONCTIONNEMENT AUTOMATIQUE D'UN VÉHICULE À MOTEUR

(30) Priorität: 18.08.2016 DE 102016215528
(43) Veröffentlichungstag der Anmeldung: 26.06.2019
(73) Patentinhaber: Volkswagen Aktiengesellschaft, 38440 Wolfsburg (DE)
(72) Erfinder: HARTOG, Johannes, 38106 Braunschweig (DE); KLEINAU, Sandra, 38531 Rötgesbüttel (DE); RECH, Bernd, 38556 Bokensdorf (DE); BUBURUZAN, Teodor, 38118 Braunschweig (DE); GLÄSER, Stefan, 38104 Braunschweig (DE); GÜNTHER, Hendrik-Jörn, 48084 Troy, MI (US); LEHMANN, Bernd, 15926 Heideblick (DE); ENGEL, Monique, 29379 Knesebeck (DE)
(86) Internationale Anmeldenummer: PCT/EP2017/067705
(87) Internationale Veröffentlichungsnummer: WO 2018/033308

(56) Entgegenhaltungen:
- DE-A1-102014 208 311
- DE-A1-102015 201 039
- US-A1- 2015 158 486
- US-A1- 2015 246 673

## Beschreibung

Die Erfindung betrifft ein Verfahren zum Betreiben eines Kraftfahrzeugs, bei welchem ein Fahrmanöver des Kraftfahrzeugs auf Basis von in einer Speichereinheit des Kraftfahrzeugs gespeicherten Steuerungsdaten durch eine Kraftfahrzeugsteuerung zumindest teilweise automatisiert ausgeführt wird. Weiterhin betrifft die Erfindung ein Kraftfahrzeug mit einer Kraftfahrzeugsteuerung zum Betreiben eines Kraftfahrzeugs, wobei die Kraftfahrzeugsteuerung ausgebildet ist, ein Fahrmanöver des Kraftfahrzeugs auf Basis von in einer Speichereinheit des Kraftfahrzeugs gespeicherten Steuerungsdaten zumindest teilweise automatisiert auszuführen.

Verfahren der gattungsgemäßen Art sowie auch Kraftfahrzeuge mit Kraftfahrzeugsteuerungen, die solche Verfahren ausführen, sind dem Grunde nach im Stand der Technik bekannt. So offenbart beispielsweise die DE 103 43 178 A1 ein Fahrerassistenzsystem mit variabler Längsführungsstrategie für Kraftfahrzeuge, wobei das Fahrerassistenzsystem eine Sensoreinrichtung zur Erfassung eines Verkehrsumfelds und einen Regler zur Regelung einer Beschleunigung des Kraftfahrzeugs gemäß einer vorgegebenen Längsführungsstrategie aufweist. Ein solches System, auch Automatic Cruise Control (ACC)-System genannt, weist ein Strategiemodul auf, das so ausgebildet ist, dass es in Betriebsphasen, in denen es nicht aktiv ist und der Fahrer selbst die Längsführung des Fahrzeugs übernimmt, das Verhalten des Fahrers beobachtet und seine Verfahrensführung anhand der hierdurch gewonnenen Daten für eine zukünftige automatische Nutzung ändert, wenn der Fahrer das Fahrerassistenzsystem aktiviert hat. In einem automatisch geführten Fahrbetrieb kann der Fahrer jedoch nur eingreifen, indem er dieses Fahrerassistenzsystem zuvor deaktiviert.

Darüber hinaus offenbart die DE 10 2015 112 120 A1 eine Crowdsourcing Kontrollübergabestrategie für automatisierte Fahrzeuge. Der Fokus liegt dabei auf einem Umschalten zwischen einem manuellen Modus und einem automatisierten Modus zum Betreiben des Kraftfahrzeugs. Es wird ein Kontrollübergabe-Ereignis definiert, mittels welchem vom automatisierten Modus auf den manuellen Modus umgeschaltet werden kann. Mittels eines Lernmoduls soll ein hierfür vorgesehenes Kontrollübergabekriterium anhand von erlerntem Fahrerverhalten angepasst werden.

Ferner offenbart die EP 2 316 705 B1 ein verhaltensbasiertes Lernen visuellen Verhaltens aus realen Verkehrssituationen für Fahrerunterstützungssysteme. Die DE 10 2014 008 380 A1 offenbart ein Verfahren zur prädiktiven Steuerung und/oder Regelung eines Antriebsstranges eines Kraftfahrzeugs. Die DE 10 2013 218 786 A1 offenbart ein Verfahren und eine Vorrichtung zum Assistieren eines Fahrers bei einem kraftstoffsparenden Segeln eines Kraftfahrzeugs mit Aktuator-aktivierbarer Kupplung. Die DE 199 52 153 A1 offenbart ein Verfahren und eine Einrichtung zur elektronischen Erkennung von Verkehrszeichen.

Obwohl sich die vorgenannten Systeme, Verfahren und Einrichtungen bewährt haben, zeigen sich dennoch Nachteile. So ist der Fahrer oftmals nicht mit dem Steuern des Fahrzeugs durch die Kraftfahrzeugsteuerung vollständig einverstanden. Dadurch ist er veranlasst, die Kraftfahrzeugsteuerung in Bezug auf das automatisierte Ausführen des Fahrmanövers zu deaktivieren und selbst die Steuerung des Kraftfahrzeugs zu übernehmen. Zwar können die bekannten Systeme aus dem vorgenommenen Fahrerverhalten lernen und gegebenenfalls Anpassungen für die Ausführung zukünftiger solcher Fahrmanöver vornehmen, jedoch erweist sich dieses Vorgehen als sehr aufwändig. Darüber hinaus erfordert eine Anpassung zum Ausführen des Fahrmanövers erheblichen Zeitaufwand.

Um dagegen einem Fahrer das assistierte, teil- oder hochautomatisierte Fahren so angenehm wie möglich zu gestalten, ist es aber sinnvoll, zu erkennen, wann der Fahrer nicht mehr mit dem Fahrverhalten der Fahrfunktion beziehungsweise dem Ausführen des Fahrmanövers durch die Kraftfahrzeugsteuerung einverstanden ist. Zwar kann durch das Deaktivieren der Kraftfahrzeugsteuerung bezüglich des Ausführen des Fahrmanövers auch erkannt werden, dass der Fahrer damit nicht einverstanden ist, jedoch lässt sich daraus nicht unmittelbar erkennen, wie der Fahrer sich das Fahrmanöver in der jeweiligen Situation vorstellt. Der Stand der Technik liefert hierzu keine geeigneten Anpassungsmöglichkeiten.

In diesen Zusammenhang offenbart die US 2015/0246673 A1 eine Fahrzeugbedienerüberwachung sowie Bedienungsjustierungen. Weiterhin offenbart die DE 10 2015 201 039 A1 ein Verfahren zum automatisierten Führen eines Kraftfahrzeugs.

Es ist deshalb die Aufgabe der Erfindung, die Reaktion des Fahrers in einer entsprechenden Situation möglichst unmittelbar zu erlernen, um sie in einer ähnlichen Situation imitieren zu können.

Als Lösung schlägt die Erfindung ein Verfahren und ein Kraftfahrzeug gemäß den unabhängigen Ansprüchen vor.

Weitere vorteilhafte Ausgestaltungen ergeben sich anhand von Merkmalen der abhängigen Ansprüche.

Verfahrensseitig wird mit der Erfindung bezüglich eines gattungsgemäßen Verfahrens insbesondere vorgeschlagen, dass für das zumindest teilweise automatisierte Ausführen des Fahrmanövers eine Sensoreinheit aktiviert wird, ein Eingreifen des Fahrers in das zumindest teilweise automatisierte Ausführen des Fahrmanövers mittels der Sensoreinheit erfasst, Abweichungsdaten in Bezug auf das von der Kraftfahrzeugsteuerung auszuführende Fahrmanöver ermittelt und die Steuerungsdaten anhand der ermittelten Abweichungsdaten für ein zukünftiges Ausführen des Fahrmanövers angepasst werden.

Kraftfahrzeugseitig wird für ein gattungsgemäßes Kraftfahrzeug insbesondere vorgeschlagen, dass das Kraftfahrzeug eine für das zumindest teilweise automatisierte Ausführen des Fahrmanövers aktivierbare Sensoreinheit aufweist, die ein Eingreifen eines Fahrers in das zumindest teilweise automatisierte Ausführen des Fahrmanövers erfasst, wobei die Kraftfahrzeugsteuerung ausgebildet ist, Abweichungsdaten in Bezug auf das von der Kraftfahrzeugsteuerung auszuführende Fahrmanövers zu ermitteln und die Steuerungsdaten anhand der ermittelten Abweichungsdaten für ein zukünftiges Ausführen des Fahrmanövers anzupassen.

Die Erfindung ermöglicht es also, nicht nur dem Grunde nach zu erkennen, dass der Fahrer mit dem ausgeführten Fahrmanöver nicht einverstanden ist, sondern sie ermöglicht es darüber hinaus, zugleich zu erkennen, wie denn der Fahrer sich das entsprechende Fahrmanöver ausgeführt wünscht. Mit der Erfindung kann dies nahezu unmittelbar erfasst werden, sodass die Steuerungsdaten ebenfalls möglichst unverzüglich angepasst werden können, sodass sie vorzugsweise für ein folgendes Fahrmanöver bereits bereitgestellt sein können. Dadurch kann die Lernfähigkeit der Kraftfahrzeugsteuerung erheblich verbessert werden, wodurch zugleich auch eine Akzeptanz des Fahrers in Bezug auf das automatisierte Führen des Kraftfahrzeugs erhöht werden kann. Dadurch kann insgesamt die Sicherheit erhöht sowie auch die Steuerung des Kraftfahrzeugs hinsichtlich der Zuverlässigkeit verbessert werden.

Ein Fahrmanöver betrifft die Führung des Kraftfahrzeugs. Das Fahrmanöver kann somit beispielsweise eine Längsführung und/oder eine Querführung umfassen. Die Längsführung kann zum Beispiel ein Beschleunigen und/oder auch ein Abbremsen des Kraftfahrzeugs umfassen. Die Querführung kann beispielsweise ein Lenken des Kraftfahrzeugs umfassen.

Ein Kraftfahrzeug im Sinne der Erfindung ist insbesondere ein Kraftwagen, vorzugsweise ein Personenkraftwagen. Das Kraftfahrzeug kann jedoch auch ein Motorrad, beispielsweise als einspuriges Kraftfahrzeug, sein. Besonders vorteilhaft ist das Kraftfahrzeug ein zumindest teilweise elektrisch antreibbares Kraftfahrzeug, beispielsweise ein Elektrofahrzeug, ein Hybridfahrzeug oder dergleichen.

Die Kraftfahrzeugsteuerung ist vorzugsweise eine elektronische Baueinheit, die insbesondere als eine Hardwareschaltung, vorzugsweise umfassend eine Rechnereinheit, ausgebildet sein kann. Die Rechnereinheit kann nach Art eines Mikroprozessors ausgebildet sein und eine Speichereinheit umfassen, in der ein ablauffähiges Rechnerprogramm gespeichert ist, mittels welchem die Rechnereinheit eine gewünschte technische Funktion bereitzustellen vermag. Darüber hinaus kann die Speichereinheit auch ausgebildet sein, die Steuerungsdaten zu speichern. Für die Steuerungsdaten kann jedoch auch eine separate Speichereinheit vorgesehen sein. Die Steuerungseinheit beziehungsweise die Speichereinheit können durch einen Halbleiterchip gebildet sein, in dem die Steuerungsdaten sowie auch weitere Daten nach Art elektronischer Daten, insbesondere digitaler elektronischer Daten, gespeichert werden können. Dem Grunde nach kann als Speichereinheit natürlich auch zumindest teilweise eine analoge Speichereinheit vorgesehen sein.

Die Steuerungsdaten umfassen analoge und/oder digitale elektrische Daten, die in der Speichereinheit abrufbar für die Kraftfahrzeugsteuerung gespeichert sind. Vorzugsweise sind die Steuerungsdaten in der Speichereinheit zumindest teilweise veränderbar gespeichert, sodass sie beispielsweise während einer Wartung oder dergleichen, geändert werden können.

Die Kraftfahrzeugsteuerung ist ausgebildet, ein Fahrmanöver des Kraftfahrzeugs auf Basis der Steuerungsdaten zumindest teilweise automatisiert auszuführen. Es bedarf in diesem Fall also im Wesentlichen nicht oder nur teilweise eines Eingriffs des Fahrers in das Fahrmanöver. Hierdurch lässt sich ein assistiertes, teilautomatisiertes oder auch hochautomatisiertes Fahren des Kraftfahrzeugs erreichen. Zu diesem Zweck können ein oder mehrere Aktoren vorgesehen sein, die auf das Kraftfahrzeug im Fahrbetrieb einwirken, sodass in bestimmungsgemäßer Weise Fahrmanöver mittels der Kraftfahrzeugsteuerung ausgeführt werden können. Vorzugsweise basiert die Kraftfahrzeugsteuerung auf einer elektronischen Steuerung. Sie kann aber alternativ auch durch eine pneumatische und/oder hydraulische Steuerung ersetzt beziehungsweise ergänzt sein.

Zum Zwecke des zumindest teilweise automatisierten Ausführens eines Fahrmanövers kann die Kraftfahrzeugsteuerung an eine Mehrzahl von Sensorelementen angeschlossen sein, mit denen wichtige Daten in Bezug auf das Ausführungen des Fahrmanövers erfasst werden können. Die Sensorelemente können beispielsweise zur Erfassung eines Verkehrswegs, insbesondere einer Fahrspur des Verkehrswegs, dem Erfassen von Verkehrszeichen, dem Erfassen von weiteren Kraftfahrzeugen in der unmittelbaren Umgebung sowie deren Geschwindigkeit und/oder dergleichen dienen. Beispielsweise bei einem vollautomatisierten Ausführen des Fahrmanövers braucht der Fahrer zum Steuern des Kraftfahrzeugs keine Aktivitäten vorzunehmen, weil dies durch die Kraftfahrzeugsteuerung vollständig autonom erreicht werden kann. Bei einem teilweise automatisierten Ausführen des Fahrmanövers kann vorgesehen sein, dass der Fahrer einzelne vorzunehmende Aktivitäten für das entsprechende Fahrmanöver manuell vornimmt, beispielsweise ein Lenken des Kraftfahrzeugs zum Zwecke des Spurwechsels und/oder dergleichen.

Die Erfindung basiert also auf der Erkenntnis, dass während des Betriebs des automatisierten Ausführens des Fahrmanövers das Eingreifen des Fahrers erfasst wird, mittels welchem eine Änderung des Fahrmanövers gegenüber dem von der Kraftfahrzeugsteuerung ausgeführten Fahrmanöver erreicht wird, und hieraus resultierende Abweichungen in Bezug auf das Ausführen des Fahrmanövers erfasst werden, aus denen dann Abweichungsdaten ermittelt werden, die zur Aktualisierung beziehungsweise Anpassung der Steuerungsdaten herangezogen werden können. Dadurch ist es möglich, vorzugsweise bereits schon beim nächsten Fahrmanöver dieser Art das Fahrmanöver angepasst auszuführen, sodass die Zufriedenheit des Fahrers dadurch erhöht ist und damit auch die Akzeptanz der automatisierten Ausführung des Fahrmanövers durch die Kraftfahrzeugsteuerung.

Zu diesem Zweck wird für das zumindest teilweise automatisierte Ausführen des Fahrmanövers eine Sensoreinheit aktiviert, mittels der das Eingreifen des Fahrers erfasst werden kann. Die Sensoreinheit kann beispielsweise vor dem Ausführen des Fahrmanövers aktiviert werden. Sie kann insbesondere fahrmanöverindividuell aktiviert werden, sodass sie lediglich für ausgewählte Fahrmanöver aktiviert wird. Es kann auch vorgesehen sein, dass die Aktivierung erst nach Einleiten des Fahrmanövers durch die Kraftfahrzeugsteuerung aktiviert wird. Darüber hinaus kann natürlich auch vorgesehen sein, dass die Sensoreinheit bereits während des automatisierten Steuerns des Kraftfahrzeugs durch die Kraftfahrzeugsteuerung permanent aktiviert ist.

Mittels der Sensoreinheit kann das Eingreifen des Fahrers erfasst werden, um dadurch Änderungen in Bezug auf das durch die Kraftfahrzeugsteuerung auszuführende Fahrmanöver erfassen zu können. Aufgrund der hierdurch erfassten Änderungen können Abweichungsdaten ermittelt werden, die dann dazu dienen können, die Steuerungsdaten für dieses Fahrmanöver anzupassen. Es kann vorgesehen sein, dass das Anpassen lediglich fahrmanöverindividuell für eine bestimmte Art eines Fahrmanövers vorgesehen ist. Darüber hinaus kann natürlich auch vorgesehen sein, dass das Anpassen der Steuerungsdaten für mehrere oder auch für alle Fahrmanöver, die mittels der Kraftfahrzeugsteuerung ausgeführt werden können, vorgesehen ist.

Es ist vorgesehen, dass die Auswerteeinheit und/oder die Zentrale die vorgegebene Randbedingung für das Anpassen der Steuerungsdaten prüft und die Steuerungsdaten nur so weit anpasst, dass die Randbedingung eingehalten wird. Dieser Fall kann zum Beispiel auftreten, wenn eine Geschwindigkeitsbegrenzung für das Fahrmanöver in dem jeweiligen Abschnitt des Verkehrswegs vorliegt. Darüber hinaus kann dies auch dadurch erfolgen, dass ein Mindestabstand zu einem vorausfahrenden Fahrzeug eingehalten wird, der beispielsweise geschwindigkeitsabhängig sein kann. Auch weitere Randbedingungen können entsprechend vorgesehen sein. So kann vorgesehen sein, dass ein Anpassen der Steuerungsdaten lediglich bis zu der maximal erlaubten Höchstgeschwindigkeit erfolgt, auch wenn der Fahrer eine höhere Geschwindigkeit wünscht. Das Gleiche kann auch für das Einhalten des Mindestabstands vorgesehen sein, bei dem der Fahrer einen geringeren Mindestabstand einhalten möchte, als er vorgeschrieben ist. Auch weitere entsprechende Randbedingungen können hierfür vorgesehen sein. Insbesondere kann diese Ausgestaltung auch mit der vorhergehenden Ausgestaltung in Bezug auf das Erfüllen der Randbedingung kombiniert sein, beispielsweise wenn es sich um unterschiedliche Randbedingungen handelt.

Ferner wird zum Ermitteln der Abweichungsdaten das Eingreifen des Fahrers über eine vorgegebene Strecke und/oder einen vorgegebenen Zeitraum aufgezeichnet. Das Aufzeichnen kann beispielsweise mittels Einleiten des Fahrmanövers durch die Kraftfahrzeugsteuerung aktiviert werden. Erfolgt ein Eingreifen des Fahrers, wird dieses automatisch aufgezeichnet. Erfolgt kein Eingreifen des Fahrers, wird auch kein entsprechendes Eingreifen aufgezeichnet. Darüber hinaus kann auch vorgesehen sein, dass das Aufzeichnen der Abweichungsdaten erst durch das tatsächliche Eingreifen des Fahrers aktiviert wird. Es kann vorgesehen sein, dass das Aufzeichnen durch eine Streckenmarkierung und/oder dergleichen gestartet wird. Darüber hinaus besteht natürlich die Möglichkeit, das Aufzeichnen auch über einen vorgegebenen Zeitraum vorzunehmen, der beispielsweise - wie zuvor ausgeführt - gestartet werden kann oder dergleichen.

Das Aufzeichnen wird mit Eintritt eines Aufzeichnungsbeendigungskriteriums beendet. Das Aufzeichnungsbeendigungskriterium kann beispielsweise der Ablauf einer vorgegebenen Strecke und/oder auch eines vorgegebenen Zeitraums sein. Beispielsweise kann die vorgegebene Strecke 500 Meter oder auch einen Kilometer oder mehr betragen. Der Zeitraum kann beispielsweise 30 Sekunden, 1 Minute oder auch mehr betragen. Ebenso kann das Aufzeichnungsbeendigungskriterium auch dadurch gebildet sein, dass ein neues Fahrmanöver durch die Kraftfahrzeugsteuerung auszuführen ist. Das Fahrmanöver kann demzufolge auch ein Abschnitt einer vom Kraftfahrzeug auszuführenden Fahrtroute oder dergleichen sein.

Die Steuerungsdaten werden mittels einer kraftfahrzeugseitigen Auswerteeinheit angepasst.

Das Anpassen erfolgt also bereits im Kraftfahrzeug selbst, beispielsweise durch die Kraftfahrzeugsteuerung selbst, wenn sie die Auswerteeinheit umfasst. Mittels der Auswerteeinheit ist es möglich, die Änderungen, die der Fahrer gegenüber dem auszuführenden Fahrmanöver durch die Kraftfahrzeugsteuerung vornimmt, zu erfassen, auszuwerten und die entsprechenden Abweichungsdaten zu ermitteln. Zugleich ist die Auswerteeinheit ausgebildet, die Steuerungsdaten entsprechend anzupassen, indem die in der Speichereinheit gespeicherten Steuerungsdaten entsprechend geändert werden. Bei dieser Ausgestaltung ist also eine weitere Kommunikation zu kraftfahrzeugexternen Einrichtungen nicht erforderlich.

Ferner werden die Abweichungsdaten über eine drahtlose Kommunikationsverbindung an eine entfernte Zentrale übermittelt, die vorzugsweise die Steuerungsdaten anpasst und die angepassten Steuerungsdaten an das Kraftfahrzeug übermittelt. Das Kraftfahrzeug kann dann die empfangenen Steuerungsdaten in der Speichereinheit anstelle der zuvor gespeicherten Steuerungsdaten abspeichern. Diese Steuerungsdaten stehen dann für zukünftige automatisiert auszuführende Fahrmanöver zur Verfügung. Diese Ausgestaltung erweist sich insofern als vorteilhaft, als dass die Abweichungsdaten in der Zentrale für weitere Optimierungsprozesse zur Verfügung gestellt werden können. Dies kann beispielsweise eine Weiterentwicklung der Kraftfahrzeugsteuerung betreffen, insbesondere in Bezug auf ergänzende oder zusätzliche Funktionalität, aber auch der Ermittlung von Fahrerprofilen und/oder dergleichen. Hierzu ist vorgesehen, dass ergänzend auch zumindest ein Teil der Steuerungsdaten an die Zentrale übermittelt wird. Vorzugsweise handelt es sich hierbei um Steuerungsdaten, die zumindest das Fahrmanöver betreffen, in das der Fahrer eingegriffen hat. Dadurch brauchen die Steuerungsdaten nicht in einer zentralen Datenbank vorgehalten zu werden.

Besonders vorteilhaft erweist es sich, wenn die Anpassung der Steuerungsdaten durch die Zentrale vorgenommen wird. So kann vorgesehen sein, dass die Steuerungsdaten in der Zentrale bereits hinterlegt sind und lediglich die Abweichungsdaten an die Zentrale übermittelt zu werden brauchen. In der Zentrale werden dann neue Steuerungsdaten unter Berücksichtigung der Abweichungsdaten und der vorhergehenden Steuerungsdaten ermittelt und an das Kraftfahrzeug über die Kommunikationsverbindung übertragen. Das Kraftfahrzeug empfängt die neuen Steuerungsdaten und speichert diese vorzugsweise anstelle der zuvor gespeicherten Steuerungsdaten ab. Dadurch braucht im Kraftfahrzeug keine entsprechende Kapazität beziehungsweise Hardware für die Auswertung und Anpassung der Steuerungsdaten vorgehalten werden. Darüber hinaus erlaubt diese Ausgestaltung auch, dass ergänzend auch Steuerungsdaten, insbesondere Abweichungsdaten aus anderen Kraftfahrzeugen berücksichtigt werden können, um so neben einer guten Anpassung an Fahrergewohnheiten auch ein hohen Maß an Sicherheit und Zuverlässigkeit gewährleisten zu können.

Ferner wird vorgeschlagen, dass die Auswerteeinheit und/oder die Zentrale eine vorgegebene Randbedingung für das Anpassen der Steuerungsdaten prüft und die Steuerungsdaten nur dann anpasst, wenn die Randbedingung durch das Anpassen der Steuerungsdaten erfüllt bleibt. Diese Ausgestaltung hat den Vorteil, dass eine Anpassung der Steuerungsdaten nur dann erfolgt, wenn auch die Randbedingung erfüllt bleibt. Die Randbedingung kann beispielsweise das Einhalten einer maximalen Geschwindigkeit, das Berücksichtigen eines Halteverbots und/oder dergleichen sein. Es würde sich nämlich als der Sicherheit im Verkehr abträglich erweisen, wenn der Fahrer eine Änderung der Steuerungsdaten herbeiführen könnte, mittels denen Überschreitungen von Verkehrsregeln mittels der Kraftfahrzeugsteuerung automatisiert vorgenommen werden würden. Dies kann durch das Prüfen der Randbedingung vermieden werden. Natürlich kann vorgesehen, dass nicht nur eine Randbedingung, sondern eine Mehrzahl von Randbedingungen geprüft werden, bevor ein Anpassen der Steuerungsdaten vorgenommen wird. Zu diesem Zweck kann vorgesehen sein, dass die Kraftfahrzeugsteuerung und/oder die Auswerteeinheit und/oder die Zentrale das Vorhandensein entsprechender Randbedingungen ermitteln. Dies kann anhand von digitalisierten Karten, weiterer Datenbanken und/oder dergleichen erfolgen.

Gemäß einer weiteren Ausgestaltung wird vorgeschlagen, dass die Steuerungsdaten veränderbare fahrerspezifische Steuerungsdaten umfassen, mittels der Sensoreinheit eine Identität des Fahrers ermittelt wird und nur die veränderbaren fahrerspezifischen Steuerungsdaten angepasst werden. In dieser Ausgestaltung können die Steuerungsdaten neben veränderbaren Steuerungsdaten auch nicht veränderbare Steuerungsdaten umfassen. Nicht veränderbaren Steuerungsdaten können beispielsweise durch sicherheitsrelevante Aspekte, technische Grenzen und/oder dergleichen gegeben sein. Fahrerspezifische Steuerungsdaten können zum Beispiel durch ein Fahrerprofil oder dergleichen gegeben sein. Zu diesem Zweck kann die Sensoreinheit die Identität des Fahrers ermitteln, sodass entsprechend zuordbare fahrerspezifische Steuerungsdaten aktiviert und für die Ausführung des Fahrmanövers herangezogen werden können. Vorzugsweise sind gerade diese fahrerspezifischen Steuerungsdaten veränderbar, und zwar in Abhängigkeit der ermittelten Identität des Fahrers. Dadurch kann vermieden werden, dass ein anhand eines ersten Fahrers ermitteltes Profil von Steuerungsdaten durch die Nutzung des Kraftfahrzeugs durch einen zweiten Fahrer in für den ersten Fahrer unerwünschter Weise verändert wird. Ein solches Fahrerprofil kann fahrertypische Eigenschaften berücksichtigen, beispielsweise passives Fahren, aggressives Fahren, Kombinationen hiervon und/oder dergleichen.

Die für das erfindungsgemäße Verfahren angeführten Merkmale und Vorteile gelten gleichermaßen für das mit dem erfindungsgemäßen Verfahren gesteuerte Kraftfahrzeug. Insofern sind auch die hierdurch erreichbaren Vorteile für das entsprechende Kraftfahrzeug anwendbar.

Weitere vorteilhafte Wirkungen und Ausgestaltungen der Erfindung ergeben sich anhand der folgenden Beschreibung von Ausführungsbeispielen unter Berücksichtigung der beigefügten Zeichnungen. In den Zeichnungen bezeichnen gleiche Bezugszeichen gleiche Merkmale und Funktionen. Die Ausführungsbeispiele dienen lediglich der Erläuterung der Erfindung und sollen diese nicht beschränken.

Es zeigen:
- Fig. 1: ein schematisches Flussdiagramm für einen erfinderischen Verfahrensablauf;
- Fig. 2 bis 11: schematische Darstellungen für verschiedene Fahrmanöver, bei denen der Fahrer des Kraftfahrzeugs in die automatisierte Führung des Kraftfahrzeugs durch eine Kraftfahrzeugsteuerung eingreift.

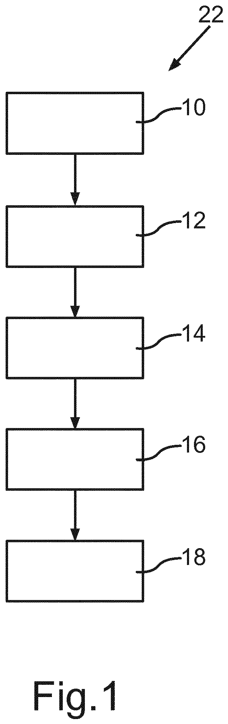

Fig. 1 zeigt in einer schematischen Darstellung ein Flussdiagramm für einen erfindungsgemäßen Verfahrensablauf eines Verfahrens 22 zum Betreiben eines Kraftfahrzeugs 20, bei welchem ein Fahrmanöver des Kraftfahrzeugs 20 auf Basis von in einer Speichereinheit des Kraftfahrzeugs 20 gespeicherten Steuerungsdaten durch eine Kraftfahrzeugsteuerung automatisiert ausgeführt 22 wird. Für das automatisierte Ausführen des Fahrmanövers wird eine Sensoreinheit aktiviert 10. Ein Eingreifen eines Fahrers in das automatisierte Ausführen des Fahrmanövers wird mittels der Sensoreinheit erfasst 12. Es werden Abweichungsdaten in Bezug auf das von der Kraftfahrzeugsteuerung auszuführende Fahrmanöver ermittelt 14 und die Steuerungsdaten werden anhand der ermittelten Abweichungsdaten für ein zukünftiges Ausführen des Fahrmanövers angepasst 18.

Vorliegend ist ferner vorgesehen, dass die Abweichungsdaten über eine drahtlose Kommunikationsverbindung von dem Kraftfahrzeug an eine entfernte Zentrale übermittelt 16 werden. Die Zentrale nimmt das Anpassen der Steuerungsdaten vor und übermittelt die angepassten Steuerungsdaten an das Kraftfahrzeug zurück.

Die Durchführung des Verfahrens 22 umfasst vorliegend vier Abschnitte, die je nach Anwendung teilweise auch optional vorgesehen und/oder ergänzt werden können:
1. Triggerung: Erkennen, dass der Fahrer nicht mehr mit dem Fahrmanöver der Kraftfahrzeugsteuerung zufrieden ist.
2. Aufzeichnungsphase, in der mittels Sensoren, vorzugsweise der gesamten Umfeldsensorik, Umgebungsdaten und das manuelle Fahrmanöver durch den Eingriff des Fahrers gespeichert werden.
3. Auswertung, entweder im Kraftfahrzeug oder entfernt in der Zentrale (Backend).
4. Anwendung von hieraus gewonnenen Abweichungsdaten.

### Zu Punkt 1:

Während sich das Kraftfahrzeug 20 bei der Durchführung einer assistierten, teil- oder hochautomatischen Fahrfunktion nach Art eines zumindest teilweise automatisiert durchgeführten Fahrmanövers befindet, ist der Fahrer in der Lage, die Ausführung des Fahrmanövers beispielsweise durch eine Veränderung einer Soll-Vorgabe wie einer Soll-Geschwindigkeit, einem Soll-Abstand und/oder dergleichen, zu beeinflussen. Er kann auch das Ausführen des Fahrmanövers durch ein eigenes Fahrmanövers übersteuern oder die zumindest teilweise automatisierte Ausführung des Fahrmanövers deaktivieren. Sobald eine solche aktive Handlung des Fahrers als Ereignis detektiert wird, kann die Aufzeichnungsphase gemäß Punkt 2 gestartet werden.

### Zu Punkt 2:

In der vorliegenden Ausgestaltung wird die Aufzeichnung durch vorzugsweise eines der vorgenannten Ereignisse gestartet. Darüber hinaus können natürlich auch noch weitere Ereignisse zum Starten der Aufzeichnung im Rahmen des Verfahrens 22 herangezogen werden. Während der Aufzeichnungsphase werden beispielsweise sämtliche Informationen, die ein Fahrzeugumfeld und einen Fahrzeugzustand beschreiben, aufgezeichnet. Zusätzlich können vorzugsweise sämtliche, Fahrermanöver und weitere Handlungen des Fahrers aufgezeichnet werden.

In dem Kraftfahrzeug 20 können ein Vielzahl von Systemen vorhanden sein, die Informationen beziehungsweise Daten zum Umfeld des Kraftfahrzeugs 20 und zum Kraftfahrzeugzustand liefern. Neben einer Umfeldsensorik, die beispielsweise Radar, Ultraschall, eine Kamera, Lidar, Lichtsensoren, Regensensoren und/oder dergleichen umfassen kann, können auch Daten beziehungsweise Informationen herangezogen werden, die vorzugsweise direkt von anderen Verkehrsteilnehmern und/oder indirekt von einer Infrastruktur bereitgestellt werden können, beispielsweise über eine drahtlose Kommunikationsverbindung basierend auf einem Kommunikationsstandard wie IST-G5/WLANp, Mobilfunk und/oder dergleichen. Darüber hinaus kann eine GNSS-Positionierung in Verbindung mit digitalen Kartendaten und/oder fahrzeuginternen Daten beziehungsweise Informationen wie Beschleunigungssensoren, Odometrie, Fahrzeuggeschwindigkeit, verfügbare Reichweite und/oder dergleichen genutzt werden, um Rückschlüsse auf das Fahrzeugumfeld und den Fahrzeugzustand zu erhalten.

Neben dem Ereignis, mittels welchem die Aufzeichnung gestartet wird, können über den vorzugsweise gesamten, Aufzeichnungszeitraum auch sämtliche weiteren Handlungen des Fahrers 12 aufgezeichnet werden. Neben Veränderungen von Soll-Vorgaben von gegebenenfalls noch aktiven Fahrfunktionen beziehungsweise Fahrmanövern, insbesondere in Bezug auf eine Längs- und/oder Querführung, kann dies eine Betätigung eines Bedienelements wie ein Gaspedal, ein Bremspedal, ein Blinker, eine Lenkung und/oder dergleichen sein.

Die Aufzeichnung kann bei Eintreten beziehungsweise Vorliegen eines Aufzeichnungsbeendigungskriteriums beendet werden. Hierzu kann zumindest teilweise eine situative Auswertung der aufgezeichneten Daten erfolgen. Mögliche Abbruchkriterien beziehungsweise Aufzeichnungsbeendigungskriterien sind:
- ein Verstreichen einer bestimmten Zeitdauer und/oder einer bestimmten zurückgelegten Strecke;
- das Verstreichen einer bestimmten Zeitdauer und/oder einer bestimmten zurückgelegten Strecke, in denen keine Handlung von dem Fahrer mehr detektiert wird;
- eine erneute Deaktivierung des zumindest teilweise automatisierten Ausführens des Fahrmanövers;
- der Fahrer übersteuert die zuvor übersteuerte Fahrfunktion nicht mehr;
- wenn die Situation, aufgrund der der Fahrer eingegriffen hat, beendet beziehungsweise abgeschlossen ist.

Auch eine Kombination der vorgenannten Kriterien kann als Aufzeichnungsbeendigungskriterium herangezogen werden.

### Zu Punkt 3:

Die während der Aufzeichnungsphase gespeicherten Daten bezüglich des Kraftfahrzeugs 20 und des Fahrzeugumfelds sowie Handlungen des Fahrers können vorzugsweise bereits während der Aufzeichnungsphase ausgewertet werden, insbesondere wenn die verschiedenen Abbruchkriterien beziehungsweise Aufzeichnungsbeendigungskriterien zum Beenden der Aufzeichnung teilweise eine Auswertung der gesammelten Informationen erfordern. Für den Fall, dass die gewählten Abbruchkriterien keine oder nur eine teilweise Auswertung erfordern, kann auch eine Auswertung nach Beendigung der Aufzeichnung vorgesehen sein.

Die Auswertung kann beispielsweise im Kraftfahrzeug selbst und/oder auch nach einem Übertragen 16 der aufgezeichneten Daten zu einer Zentrale durch diese erfolgen, die Abweichungsdaten zu ermitteln 14. Das Übertragen der Daten kann beispielsweise direkt aus dem Fahrzeug mittels Funk oder auch durch Auslesen der Speichereinheit des Kraftfahrzeugs 20 bei einem Aufenthalt, wie zum Beispiel in einer Werkstatt oder dergleichen, erfolgen.

Das Auswerten kann beispielsweise im Rahmen einer Umfeldanalyse erfolgen, zu der vorzugsweise sämtliche gesammelten Daten der Sensoren und die Daten von anderen Verkehrsteilnehmern und/oder der Verkehrsinfrastruktur herangezogen werden können. Durch die Umfeldanalyse kann die Verkehrssituation rekonstruiert und eingeschätzt werden. Hierdurch können insbesondere die folgenden Fragestellungen beantwortet werden:
- Wo befindet sich das eigene Kraftfahrzeug 20?
- Wie ist der aktuelle Straßenverlauf 24?
- Wie ist der vorausliegende Straßenverlauf 24?
- Wie ist der Zustand der Straße 24?
- Wo befinden sich andere Verkehrsteilnehmer 30, 36, 38 und wie ist deren Zustand, insbesondere in Bezug auf deren Geschwindigkeit, deren Beschleunigung und/oder dergleichen?
- Gibt es relevante Verkehrsschilder 46?
- Gibt es Informationen von der Verkehrsinfrastruktur?

Vorzugsweise wird die Umfeldanalyse für den gesamten Zeitraum der Aufzeichnung durchgeführt. Er kann jedoch bedarfsweise auch lediglich für einen Teil hiervon durchgeführt werden.

Neben der Umfeldanalyse kann auch der eigene Fahrzeugzustand, beispielsweise die eigene Fahrzeuggeschwindigkeit, eine Drehzahl eines Fahrzeugmotors, eine eigene Beschleunigung und/oder dergleichen sowie vorzugsweise auch die Handlungen des Fahrers ausgewertet werden.

Durch Zusammenführung der Umfeldanalyse und der weiteren Auswertung des Fahrzeugzustands und der Fahrerhandlungen kann das situative Verhalten des Fahrers ermittelt und erkannt werden.

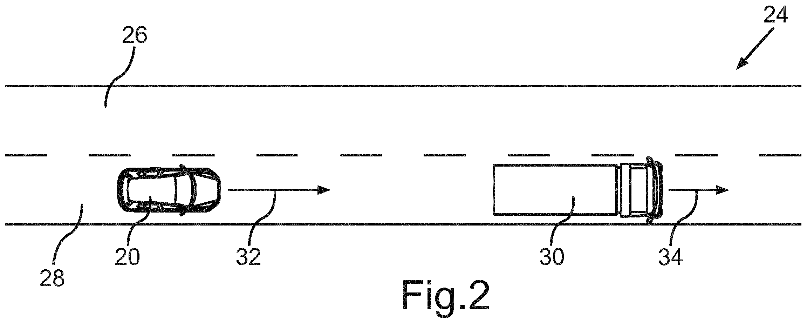

Die Fig. 2 bis 11 zeigen eine Reihe von Situationen, bei denen die Kraftfahrzeugsteuerung automatisiert Fahrmanöver ausführt und der Fahrer auf unterschiedliche Art und Weise eingreift. Ein Kraftfahrzeug 20 befindet sich in einem Betriebszustand, bei dem es mittels einer Kraftfahrzeugsteuerung automatisiert gesteuert wird. Die Kraftfahrzeugsteuerung führt demnach automatisierte Fahrmanöver aus. Der Fahrer bräuchte dem Grunde nach also nicht einzugreifen. Die Sensoreinheit umfasst hier vorliegend sämtliche Bedienelemente des Kraftfahrzeugs 20, mittels denen der Fahrer in das durch die Kraftfahrzeugsteuerung automatisiert ausgeführte Fahrmanöver eingreifen kann, beispielsweise ein Lenksensor, ein Bremssensor, ein Gaspedalsensor und/oder dergleichen.

So zeigt Fig. 2 in einer schematischen Darstellung eine Straße 24, hier eine Fahrtrichtung einer Autobahn, mit zwei Fahrstreifen 26, 28. Der Fahrstreifen 26 ist eine Überholspur, wohingegen der Fahrstreifen 28 eine rechte Spur darstellt. Dem Grunde nach ist die Erfindung jedoch nicht auf Autobahnen beschränkt sondern kann auch bei anderen Straßen zum Einsatz kommen, die beispielswiese für jede der Fahrtrichtungen nur eine einzige Fahrspur zur Verfügung stellen oder dergleichen.

Vorliegend sind auf dem Fahrstreifen 28 das Kraftfahrzeug 20 sowie ein vorausfahrendes Kraftfahrzeug 30 positioniert. Das Kraftfahrzeug 20 fährt mit einer Fahrgeschwindigkeit, die durch den Pfeil 32 dargestellt ist. Das Kraftfahrzeug 30 fährt mit einer Fahrgeschwindigkeit, die durch den Pfeil 34 dargestellt ist. Vorliegend hat das Kraftfahrzeug 30 eine kleinere Geschwindigkeit als das Kraftfahrzeug 20. Die Situation entspricht daher einem Heranfahren des Kraftfahrzeugs 20 an ein langsameres Kraftfahrzeug, wie es beispielsweise auf einer Autobahn vorkommt. In der vorliegenden Ausgestaltung ist ein Überholen möglich. Ferner ist vorliegend vorgesehen, dass das Kraftfahrzeug 20 durch die Kraftfahrzeugsteuerung das Fahrmanöver des Geradeausfahrens automatisiert ausführt.

Der Fahrer hat nun zwei Optionen, das durch die Kraftfahrzeugsteuerung ausgeführte Fahrmanöver zu beeinflussen. In einem ersten Szenario greift der Fahrer durch Betätigen des Gaspedals ein, um die Geschwindigkeit zu erhöhen, damit ein Überholvorgang ausgeführt werden kann. In einem zweiten alternativen Szenario greift der Fahrer ein, um die Geschwindigkeit des Kraftfahrzeugs 20 anzupassen und das Kraftfahrzeug 30 nicht zu überholen.

In beiden Szenarien wird das Eingreifen des Fahrers erfasst und beispielsweise ein Geschwindigkeitsprofil oder auch das Überholverhalten durch Anpassen der Steuerungsdaten verändert. Zu diesem Zweck werden - wie oben bereits ausführlich erläutert - Abweichungsdaten ermittelt und die Steuerungsdaten anhand der ermittelten Abweichungsdaten angepasst. Dadurch steht für zukünftige vergleichbare Fahrmanöver ein neuer Satz von Steuerungsdaten zur Verfügung. Die Kraftfahrzeugsteuerung kann daher zukünftig angepasst an das gewünschte Fahrerverhalten reagieren.

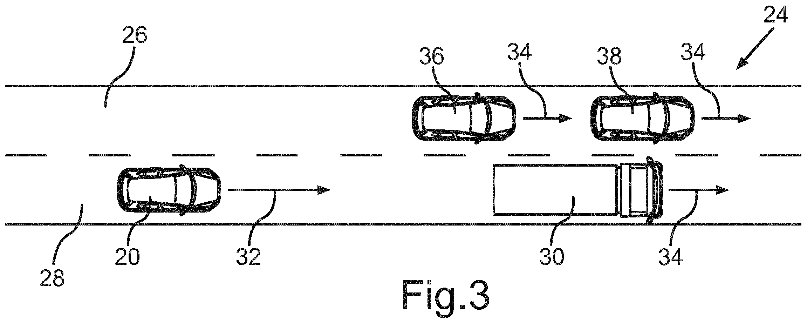

Fig. 3 beschreibt ein vergleichbares Szenario wie Fig. 2, wobei nunmehr auf der Überholspur 26 ebenfalls zwei Fahrzeuge 36, 38 fahren, die ebenfalls wie das Fahrzeug 30 mit der Geschwindigkeit, dargestellt durch den Pfeil 34, fahren. Dieses Szenario kann beispielsweise dem Nähern an ein Stauende beziehungsweise an ein Kolonnenende entsprechen. Hier besteht die Möglichkeit für den Fahrer, in das automatisierte Ausführen des eigenen Fahrmanövers entweder durch abgestuftes Anpassen der eigenen Geschwindigkeit des Kraftfahrzeugs 20 oder auch durch Ausrollen einzugreifen. Auch hier wird wieder das Geschwindigkeitsprofil gemäß der Erfindung angepasst.

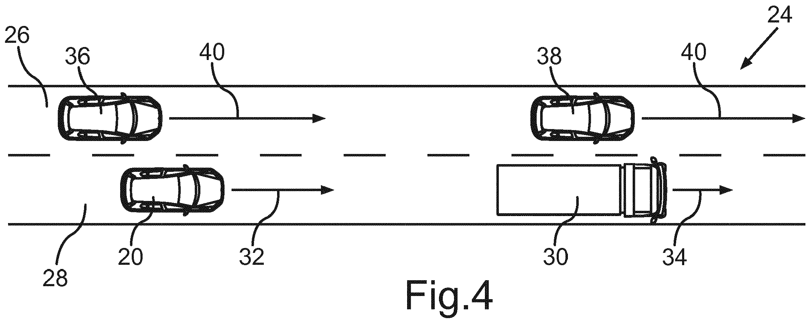

Fig. 4 zeigt ein weiteres Ausführungsbeispiel, ähnlich wie Fig. 3, wobei hier jedoch die Kraftfahrzeuge 36, 38 mit einer hohen Geschwindigkeit fahren, die durch den Pfeil 40 dargestellt ist. Das Kraftfahrzeug 36 befindet sich neben dem Kraftfahrzeug 20 auf der Überholspur 26 und ist schneller als das Kraftfahrzeug 20. Ebenso ist das Kraftfahrzeug 38 neben dem Kraftfahrzeug 30 auf der Überholspur 26 und hat eine deutlich größere Geschwindigkeit als das Kraftfahrzeug 30. Das Kraftfahrzeug 20 nähert sich also auf dem Fahrstreifen 28 dem langsameren Kraftfahrzeug 30.

Der Fahrer kann hier durch folgende Möglichkeiten in das automatisierte Ausführen des Fahrmanövers eingreifen:
- Geschwindigkeit abgestuft anpassen
- Ausrollen
- hinter den schnelleren Fahrzeugen 36, 38 einfädeln und überholen
- zwischen den schnelleren Fahrzeugen 36, 38 einfädeln und überholen.

Diese Eingriffe des Fahrers können erkannt werden und zum Anpassen des Geschwindigkeitsprofils, eines Überholverhaltens sowie auch eines Aggressivitätsgrades dienen.

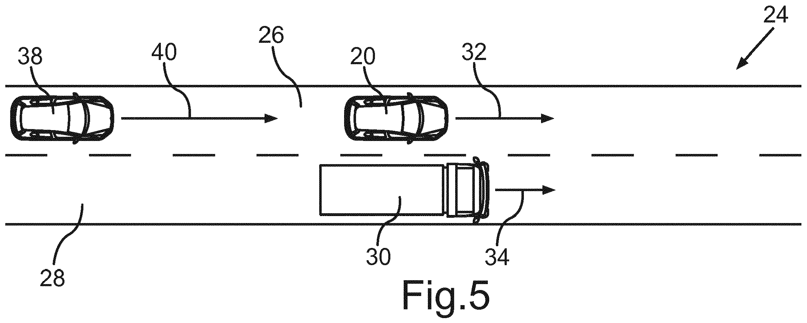

Fig. 5 zeigt ein weiteres Ausführungsbeispiel basierend auf den vorhergehenden Ausführungsbeispielen, bei denen das Kraftfahrzeug 38 mit einer größeren Geschwindigkeit als das Kraftfahrzeug 20 auf der Überholspur 26 an das Kraftfahrzeug 20 heranfährt. Das Kraftfahrzeug 20 befindet sich im Überholvorgang in Bezug auf das Kraftfahrzeug 30, welches auf der rechten Spur 28 fährt. Der Fahrer kann hier durch Erhöhen oder auch durch Beibehalten der Geschwindigkeit in das Fahrmanöver eingreifen, abhängig von dem jeweils von der Kraftfahrzeugsteuerung ausgeführten Fahrmanöver. Darüber hinaus besteht die Möglichkeit, knapp vor dem Kraftfahrzeug 30 einen Spurwechsel vorzunehmen und von der Überholspur 26 auf die rechte Spur 28 einzuscheren. Auch hier können das Geschwindigkeitsprofil und das Überholverhalten dazu dienen, die Steuerungsdaten entsprechend anzupassen.

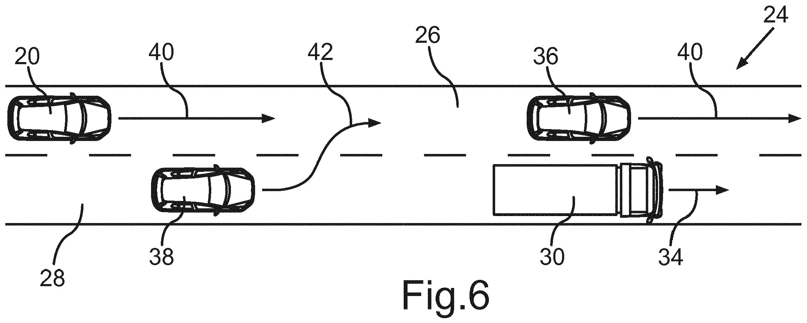

Die Ausgestaltung gemäß Fig. 6 betrifft das Ermöglichen eines Einfädelns. Es handelt sich hierbei wieder um eine Autobahn mit einer Straße 24, bei der der rechte Fahrstreifen mit 28 und die Überholspur mit 26 gekennzeichnet sind. Das eigene Kraftfahrzeug 20 befindet sich mit einer durch eine Länge des Pfeils 40 gekennzeichneten Geschwindigkeit auf der Überholspur 26. Ein auf der rechten Spur 28 vorausfahrendes Kraftfahrzeug 38 möchte gemäß dem Pfeil 42 auf die Überholspur 26 vor dem Kraftfahrzeug 20 einscheren. Vor dem Kraftfahrzeug 38 fährt mit einigem Abstand das Kraftfahrzeug 30. Neben dem Kraftfahrzeug 30 ist auf der Überholspur 26 das Kraftfahrzeug 36, welches das Kraftfahrzeug 30 überholt. Der Fahrer des Kraftfahrzeugs 20 kann nun wie folgt in das automatisiert ausgeführte Fahrmanöver eingreifen, und zwar indem er die Geschwindigkeit abgestuft anpasst, ausrollt, die Geschwindigkeit beibehält oder auch die Geschwindigkeit erhöht. Entsprechend kann hieraus eines neues Geschwindigkeitsprofil beziehungsweise der Aggressivitätsgrad ermittelt werden.

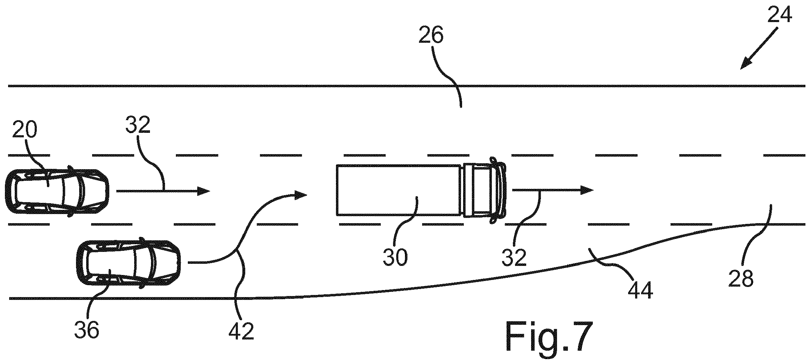

Fig. 7 zeigt einen weiteren Vorgang des Einfädelns bei einer Straße 24 einer Autobahn gemäß einer weiteren Ausgestaltung. Zusätzlich zu den in den vorangegangenen Figuren dargestellten Ausgestaltungen ist hier ein Einfädelstreifen 44 vorgesehen, auf dem das Fahrzeug 36 fährt, welches gemäß dem Pfeil 42 zwischen dem Kraftfahrzeug 20 und dem Kraftfahrzeug 30 einfädeln möchte. Der Fahrer des Kraftfahrzeugs 20 kann automatisiert ausgeführte Fahrmanöver durch folgende Maßnahmen eingreifen:
- Geschwindigkeit verringern
- Geschwindigkeit beibehalten
- Fahrstreifen wechseln
- Geschwindigkeit erhöhen ohne den Fahrstreifen zu wechseln.

Entsprechend können neue Steuerungsdaten bereitgestellt werden, die ein neues Geschwindigkeitsprofil, ein geändertes Überholverhalten und/oder einen geänderten Aggressivitätsgrad beziehungsweise Kooperationsgrad darstellen.

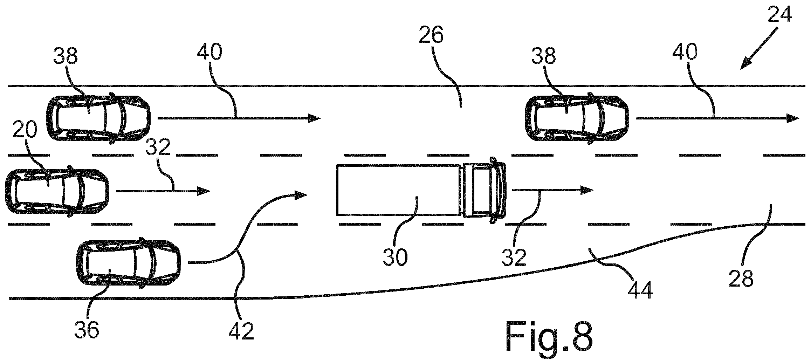

Fig. 8 zeigt ein Ausführungsbeispiel, welches auf dem Ausführungsbeispiel von Fig. 7 basiert, wobei ergänzend zum Ausführungsbeispiel zu Fig. 7 nunmehr auf dem Überholstreifen 26 zwei weitere Kraftfahrzeuge 38 mit einer durch den Pfeil 40 dargestellten hohen Geschwindigkeit fahren. Die Kraftfahrzeuge 38 überholen die Kraftfahrzeuge 20, 30, 36. Ansonsten entspricht dieses Ausführungsbeispiel dem Einfädelvorgang, wie es bereits zu Fig. 7 erläutert worden ist. Im Unterschied zum Ausführungsbeispiel zu Fig. 7 kann hier der Fahrer den Fahrstreifen nicht wechseln. Infolgedessen ist dieser Eingriff durch den Fahrer nicht möglich. Entsprechend können die Steuerungsdaten bezüglich eines Geschwindigkeitsprofils, einem Aggressivitätsgrad beziehungsweise einem Kooperationsgrad angepasst werden.

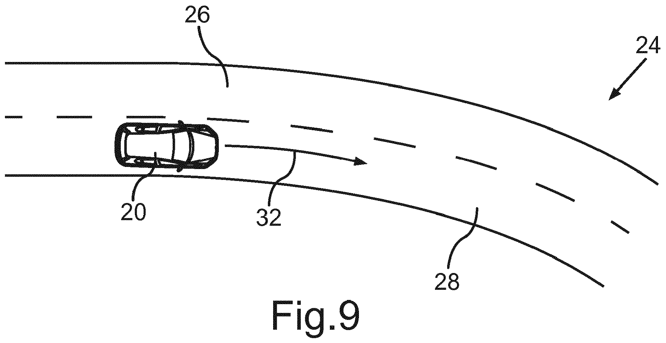

Fig. 9 zeigt eine weitere Ausgestaltung, bei der sich das Kraftfahrzeug 20 einer Kurve nähert. Das Kraftfahrzeug 20 ist auf der rechten Fahrspur 28 der Straße 24 mit einer durch den Pfeil 32 dargestellten Geschwindigkeit unterwegs. Die Überholspur 26 der Straße 24 ist frei. Der Fahrer kann nun in das automatisiert ausgeführte Fahrmanöver durch Verringern der Geschwindigkeit, Ausrollen, durch Beibehalten der Geschwindigkeit sowie durch Auswahl und gegebenenfalls Wechseln der Fahrbahn 26, 28 eingreifen. Die Steuerungsdaten können dann entsprechend bezüglich des Geschwindigkeitsprofils sowie eines Querführungsverhaltens in der Kurve angepasst werden.

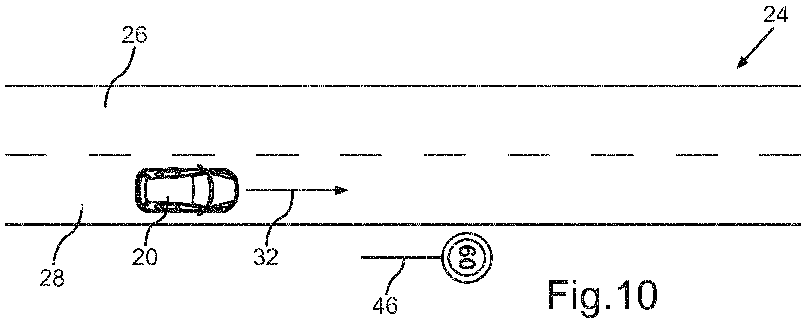

Fig. 10 zeigt ein weiteres Ausführungsbeispiel, bei dem das Kraftfahrzeug 20 auf der Straße 24, und zwar dem rechten Fahrstreifen 28, alleine fährt. Vorliegend ist vorgesehen, dass ein Verkehrszeichen 46 bezüglich einer maximal zulässigen Höchstgeschwindigkeit aufgestellt ist. Das Kraftfahrzeug 20 nähert sich dem Verkehrszeichen 46. Der Fahrer kann nun abgestuftes Anpassen der Geschwindigkeit sowie Ausrollen beziehungsweise Segeln in das automatisiert ausgeführte Fahrmanöver des Kraftfahrzeugs 20 eingreifen. Hieraus kann eine Anpassung des Geschwindigkeitsprofils erfolgen.

### Zu Punkt 4:

Die Auswertung der gesammelten Umfeld- und/oder Fahrzeugdaten im Zusammenhang mit den Handlungen des Fahrers können dazu dienen, das vom Fahrer durchgeführte Fahrmanöver in einer ähnlichen Situation zu einem späteren Zeitpunkt zu imitieren beziehungsweise nachzuahmen. Hierzu können die situativen Parameter, beispielsweise Soll-Parameter, der Fahrfunktion, entsprechend des ausgewerteten Fahrmanövers des Fahrers angepasst 18 werden. Die Parameter brauchen dabei nicht exakt dem Fahrerverhalten zu entsprechen. Es ist auch denkbar, die Parameter nur grob anzupassen, zum Beispiel um ein Fahrerverhalten zu filtern beziehungsweise zu glätten, nur in einem bestimmten, vorgegebenen Rahmen eine Anpassung vorzunehmen sowie auch die Einhaltung von Verkehrsregeln zu wahren, beispielsweise indem entsprechende Randbedingungen berücksichtigt werden.

Die folgenden ergänzenden Aspekte können mit den voranstehend beschriebenen Ausgestaltungen in nahezu beliebiger Weise kombiniert werden.

So kann grundsätzlich auch vorgesehen sein, dass lediglich vorgegebene ausgewählte Parameter angepasst werden können. Es brauchen also nicht sämtliche Steuerungsdaten veränderbar zu sein. Es kann vorgesehen sein, dass lediglich ausgewählte Steuerungsdaten anpassbar sind.

Es kann darüber hinaus vorgesehen sein, dass in einer ähnlichen Situation, in der der Fahrer anders handelt, das zuvor gelernte Fahrmanöver wieder verworfen oder auch überschrieben wird.

Des Weiteren kann die Aufzeichnung und Auswertung des situativen Fahrmanövers des Fahrers auch zu einer Zentrale übermittelt werden. Das situative Fahrmanöver kann so zum Beispiel für folgende Funktionsupdates oder auch Entwicklungen der Fahrfunktion und/oder zur Verbesserung einer initialen Parametrierung genutzt werden. Dies kann zusätzlich noch mit einer Typisierung des Fahrers oder dem vom Fahrer gewählten Fahrprofil verknüpft werden. So kann anderen Fahrern mit ähnlicher beziehungsweise gleicher Typisierung oder gleichem Fahrprofil ein derartiger Parametersatz als Parametrisierung angeboten werden.

Vorzugsweise wird das erlernte Fahrmanöver bei einer nachfolgenden, ähnlichen Situation angewendet, bevor der Fahrer erneut in das automatisiert ausgeführte Fahrmanöver eingreift, beziehungsweise deaktiviert oder überschreibt oder dergleichen. Das automatisierte Ausführen des Fahrmanövers erfolgt deshalb vorzugsweise früher, als es der Fahrer täte. Darüber hinaus kann auch vorgesehen sein, dass dem Fahrer ein Feedback gegeben wird und ihm so mitgeteilt wird, dass das Fahrzeug das Fahrmanöver nach einem Eingriff des Fahrers erlernt beziehungsweise geändert hat, sodass der Fahrer für eine nachfolgend auftretende ähnliche Situation sensibilisiert ist und der Fahrer ein der Situation angepasstes Fahrmanöver erwarten kann.

Darüber hinaus kann der Fahrer vor dem Anpassen der Steuerungsdaten auch gefragt werden, ob das situative Manöver berücksichtigt werden soll.

Weiterhin kann vorgesehen sein, dass dem Fahrer durch ein Bild oder auch ein Piktogramm eine erkannte Umfeldsituation angezeigt wird.

Dadurch bekommt der Fahrer die Information, zu welcher Situation das Kraftfahrzeug ein bestimmtes Fahrmanöver lernt.

Weiterhin wäre es ebenfalls möglich, dem Fahrer das gelernte Fahrmanöver nach Wichtigkeit priorisieren zu lassen.

Die Ausführungsbeispiele dienen lediglich der Erläuterung der Erfindung und sind für diese nicht beschränkend. Schließlich ist anzumerken, dass die für das erfindungsgemäße Verfahren beschriebenen Vorteile und Merkmale sowie Ausführungsformen gleichermaßen für das entsprechende Kraftfahrzeug gelten und umgekehrt. Insbesondere können für Vorrichtungsmerkmale entsprechende Verfahrensmerkmale und umgekehrt vorgesehen sein.

### Bezugszeichenliste

- 10: Aktivierung Sensoreinheit
- 12: Eingreifen des Fahrers erfassen
- 14: Abweichungsdaten ermitteln
- 16: Übermitteln an Zentrale
- 18: Anpassen
- 20: Kraftfahrzeug
- 22: Verfahren
- 24: Straße
- 26: Überholspur
- 28: rechte Spur
- 30: Kraftfahrzeug
- 32: Pfeil
- 34: Pfeil
- 36: Kraftfahrzeug
- 38: Kraftfahrzeug
- 40: Pfeil
- 42: Pfeil
- 44: Einfädelstreifen
- 46: Verkehrszeichen

## Patentansprüche

1. Verfahren zum Betreiben eines Kraftfahrzeugs (20), bei welchem ein Fahrmanöver des Kraftfahrzeugs (20) auf Basis von in einer Speichereinheit des Kraftfahrzeugs (20) gespeicherten Steuerungsdaten durch eine Kraftfahrzeugsteuerung zumindest teilweise automatisiert ausgeführt (22) wird, wobei
für das zumindest teilweise automatisierte Ausführen des Fahrmanövers eine Sensoreinheit aktiviert (10) wird, ein Eingreifen eines Fahrers in das zumindest teilweise automatisierte Ausführen des Fahrmanövers mittels der Sensoreinheit erfasst (12), Abweichungsdaten in Bezug auf das von der Kraftfahrzeugsteuerung auszuführende Fahrmanöver ermittelt (14) und die Steuerungsdaten anhand der ermittelten Abweichungsdaten für ein zukünftiges Ausführen des Fahrmanövers angepasst (18) werden,
**dadurch gekennzeichnet, dass**
eine kraftfahrzeugseitige Auswerteeinheit und/oder eine entfernte Zentrale, an die die Abweichungsdaten sowie ergänzend auch zumindest ein Teil der Steuerungsdaten über eine drahtlose Kommunikationsverbindung übermittelt (16) werden, eine vorgegebene Randbedingung für das Anpassen der Steuerungsdaten prüft und die Steuerungsdaten nur soweit anpasst (18), dass die Randbedingung eingehalten wird, wobei zum Ermitteln der Abweichungsdaten das Eingreifen des Fahrers über eine vorgegebene Strecke und/oder einen vorgegebenen Zeitraum aufgezeichnet wird, wobei das Aufzeichnen mit Eintritt eines Aufzeichnungsbeendigungskriteriums beendet wird.

2. Verfahren nach Anspruch 1,
**dadurch gekennzeichnet, dass**
die Zentrale die Steuerungsdaten anpasst und die angepassten Steuerungsdaten an das Kraftfahrzeug übermittelt.

3. Verfahren nach einem der vorhergehenden Ansprüche,
**dadurch gekennzeichnet, dass**
die Auswerteeinheit und/oder die Zentrale die vorgegebene Randbedingung für das Anpassen der Steuerungsdaten prüft und die Steuerungsdaten nur dann anpasst, wenn die Randbedingung durch das Anpassen (18) der Steuerungsdaten erfüllt bleibt.

4. Verfahren nach einem der vorhergehenden Ansprüche,
**dadurch gekennzeichnet, dass**
die Steuerungsdaten veränderbare fahrerspezifische Steuerungsdaten umfassen, mittels der Sensoreinheit eine Identität des Fahrers ermittelt wird und nur die veränderbaren fahrerspezifischen Steuerungsdaten angepasst (18) werden.

5. Kraftfahrzeug (20) mit einer Kraftfahrzeugsteuerung zum Betreiben eines Kraftfahrzeugs, wobei die Kraftfahrzeugsteuerung ausgebildet ist, ein Fahrmanöver des Kraftfahrzeugs auf Basis von in einer Speichereinheit des Kraftfahrzeugs gespeicherten Steuerungsdaten zumindest teilweise automatisiert auszuführen (22),
wobei das Kraftfahrzeug (20)eine für das zumindest teilweise automatisierte Ausführen des Fahrmanövers aktivierbare (10) Sensoreinheit aufweist, die ein Eingreifen eines Fahrers in das zumindest teilweise automatisierte Ausführen des Fahrmanövers erfasst (12), wobei die Kraftfahrzeugsteuerung ausgebildet ist, Abweichungsdaten in Bezug auf das von der Kraftfahrzeugsteuerung auszuführende Fahrmanöver zu ermitteln (14) und die Steuerungsdaten anhand der ermittelten Abweichungsdaten für ein zukünftiges Ausführen des Fahrmanövers anzupassen (18),
**dadurch gekennzeichnet, dass**
eine kraftfahrzeugseitige Auswerteeinheit und/oder eine Zentrale, an die die Abweichungsdaten sowie ergänzend auch zumindest ein Teil der Steuerungsdaten über eine drahtlose Kommunikationsverbindung übermittelt (16) werden, eine vorgegebene Randbedingung für das Anpassen der Steuerungsdaten prüft und die Steuerungsdaten nur soweit anpasst (18), um die Randbedingung einzuhalten, wobei die Kraftfahrzeugsteuerung ausgebildet ist, zum Ermitteln der Abweichungsdaten das Eingreifen des Fahrers über eine vorgegebene Strecke und/oder einen vorgegebenen Zeitraum aufzuzeichnen und das Aufzeichnen mit Eintritt eines Aufzeichnungsbeendigungskriteriums zu beenden.

## Claims

1. Method for operating a motor vehicle (20), in which a driving maneuver of the motor vehicle (20) is at least partly automatically carried out (22) by a motor vehicle controller on the basis of control data stored in a memory unit of the motor vehicle (20),
a sensor unit being activated (10) when the driving maneuver is being at least partly automatically carried out, an intervention measure by a driver while the driving maneuver is being at least partly automatically carried out being detected (12) by means of the sensor unit, deviation data relating to the driving maneuver to be carried out by the motor vehicle controller being determined (14), and the control data being adjusted (18) on the basis of the determined deviation data for when the driving maneuver is carried out in future,
**characterized in that**
a motor-vehicle-side evaluation unit and/or a remote control center, to which the deviation data and also at least part of the control data are transmitted (16) via a wireless communication link, checks a predetermined boundary condition for adjusting the control data and adjusts (18) the control data only to the extent that the boundary condition is maintained, intervention measures of the driver being recorded over a predetermined distance and/or a predetermined time period in order to determine the deviation data, recording being completed when a recording completion criterion occurs.

2. Method according to claim 1,
**characterized in that**
the control center adjusts the control data and transmits the adjusted control data to the motor vehicle.

3. Method according to any of the preceding claims,
**characterized in that**
the evaluation unit and/or the control center checks the predetermined boundary condition for adjusting the control data and adjusts the control data only when the boundary condition remains fulfilled by the adjustment (18) of the control data.

4. Method according to any of the preceding claims,
**characterized in that**
the control data comprise variable driver-specific control data, an identity of the driver is determined by means of the sensor unit and only the variable driver-specific control data are adjusted (18).

5. Motor vehicle (20) comprising a motor vehicle controller for operating a motor vehicle, the motor vehicle controller being designed to at least partly automatically carry out (22) a driving maneuver of the motor vehicle on the basis of control data stored in a memory unit of the motor vehicle,
the motor vehicle (20) having a sensor unit which can be activated (10) when the driving maneuver is being at least partly automatically carried out and which detects (12) an intervention measure by a driver while the driving maneuver is being at least partly automatically carried out, the motor vehicle controller being designed to determine (14) deviation data relating to the driving maneuver to be carried out by the motor vehicle controller and to adjust (18) the control data on the basis of the determined deviation data for when the driving maneuver is carried out in the future,
**characterized in that**
a motor-vehicle-side evaluation unit and/or a control center, to which the deviation data and also at least part of the control data are transmitted (16) via a wireless communication link, checks a predetermined boundary condition for adjusting the control data and adjusts (18) the control data only to the extent so as to maintain the boundary condition, the motor vehicle controller being designed to record the intervention measures of the driver over a predetermined distance and/or a predetermined time period in order to determine the deviation data and to complete recording when a recording completion criterion occurs.

## Revendications

1. Procédé permettant de faire fonctionner un véhicule automobile (20), dans lequel une manoeuvre de conduite du véhicule automobile (20) est réalisée (22) de manière au moins partiellement automatisée par un dispositif de commande de véhicule automobile sur la base de données de commande stockées dans une unité de stockage du véhicule automobile (20),
pour la réalisation au moins partiellement automatisée de la manoeuvre de conduite, une unité formant capteur étant activée (10), une intervention d'un conducteur dans la réalisation au moins partiellement automatisée de la manoeuvre de conduite étant détectée (12) au moyen de l'unité formant capteur, des données de variation par rapport à la manoeuvre de conduite à réaliser par le dispositif de commande de véhicule automobile étant déterminées (14) et les données de commande étant adaptées (18) à l'aide des données de variation déterminées pour une réalisation future de la manoeuvre de conduite,
**caractérisé en ce que**
une unité d'évaluation côté véhicule automobile et/ou un central à distance, auxquels les données de variation ainsi qu'également en plus au moins une partie des données de commande sont transmises (16) par l'intermédiaire d'une liaison de communication sans fil, vérifient une condition limite prédéfinie pour l'adaptation des données de commande et n'adaptent (18) les données de commande que dans la mesure où la condition limite est respectée, pour la détermination des données de variation, l'intervention du conducteur étant enregistrée sur une distance prédéfinie et/ou une période de temps prédéfinie, l'enregistrement se terminant avec l'apparition d'un critère de terminaison d'enregistrement.

2. Procédé selon la revendication 1,
**caractérisé en ce que**
le central adapte les données de commande et transmet les données de commande adaptées au véhicule automobile.

3. Procédé selon l'une des revendications précédentes,
**caractérisé en ce que**
l'unité d'évaluation et/ou le central vérifient la condition limite prédéfinie pour l'adaptation des données de commande et n'adaptent les données de commande que si la condition limite reste satisfaite par l'adaptation (18) des données de commande.

4. Procédé selon l'une des revendications précédentes,
**caractérisé en ce que**
les données de commande comprennent des données de commande spécifiques au conducteur pouvant être modifiées, une identité du conducteur est déterminée au moyen de l'unité formant capteur et seules les données de commande spécifiques au conducteur pouvant être modifiées sont adaptées (18).

5. Véhicule automobile (20) comportant un dispositif de commande de véhicule automobile permettant de faire fonctionner un véhicule automobile, le dispositif de commande de véhicule automobile étant configuré pour réaliser (22) de manière au moins partiellement automatisée une manoeuvre de conduite du véhicule automobile sur la base de données de commande stockées dans une unité de stockage du véhicule automobile,
le véhicule automobile (20) présentant une unité formant capteur pouvant être activée (10) pour la réalisation au moins partiellement automatisée de la manoeuvre de conduite, laquelle unité formant capteur détecte (12) une intervention d'un conducteur dans la réalisation au moins partiellement automatisée de la manoeuvre de conduite, le dispositif de commande de véhicule automobile étant configuré pour déterminer (14) des données de variation par rapport à la manoeuvre de conduite à réaliser par le dispositif de commande de véhicule automobile et pour adapter (18) les données de commande à l'aide des données de variation déterminées pour une réalisation future de la manoeuvre de conduite,
**caractérisé en ce que**
une unité d'évaluation côté véhicule automobile et/ou un central, auxquels les données de variation ainsi qu'également en plus au moins une partie des données de commande sont transmises (16) par l'intermédiaire d'une liaison de communication sans fil, vérifient une condition limite prédéfinie pour l'adaptation des données de commande et adaptent (18) les données de commande uniquement dans la mesure nécessaire pour respecter la condition limite, le dispositif de commande de véhicule automobile étant configuré, pour la détermination des données de variation, pour enregistrer l'intervention du conducteur sur une distance prédéfinie et/ou une période de temps prédéfinie et pour terminer l'enregistrement avec l'apparition d'un critère de terminaison d'enregistrement.
